# EUROPEAN PATENT SPECIFICATION

(11) **EP 3 044 090 B1**
(45) Date of publication and mention of the grant of the patent: **18.04.2018**
(21) Application number: 14790361.1
(22) Date of filing: 04.09.2014
(51) Int. Cl.: B64C 31/036, B64C 31/06

(54) **ARC-TYPE WING WITH IMPROVED SHOULDERS**
BOGENFLÜGEL MIT VERSTÄRKTEM SCHULTERBEREICH
AILETTE EN ARC À ÉPAULEMENTS AMÉLIORÉS

(30) Priority: 13.09.2013 IT TO20130750
(43) Date of publication of application: 20.07.2016
(73) Proprietor: Kite Gen Research S.R.L., 10099 San Mauro Torinese (TO) (IT)
(72) Inventor: MASSIMO, Ippolito, I-10099 San Mauro Torinese (TO) (IT)
(74) Representative: Garavelli, Paolo
(86) International application number: PCT/IT2014/000233
(87) International publication number: WO 2015/037026

(56) References cited:
- EP-A1- 1 385 739
- WO-A1-2009/035492
- WO-A1-2010/084520
- WO-A2-2007/135701

## Description

The present invention deals with an arc-type wing with improved shoulders.

An arc-type wing falls within the systems for extracting energy from wind through ultra-light wings, with high aerodynamic efficiency, subjected to high wing loads, under tension-structure mode.

An arc-type wing is subjected only to pure tensional forces, generating an aerodynamic lift useful, at the same time, both for keeping its own shape and for generating energy.

The terms used in this document have the following meaning.

*Angle of Attack:* is the angle between the wing chord of any aerodynamic profile and the apparent wind. For an arc-type wing, the global angle of attack is generally deemed as the angle between apparent wind and mean line of aerodynamic chord profiles in the central bay section.

*Center of Pressure:* is the point in which all aerodynamic forces generated by an aerodynamic profile can be deemed operating. For kites of an arc-type wing, the center of pressure if at the 10-20% of the chord.

*Chord line:* is a line traced through the wing section from the front edge to the outlet edge.

*Lift to Drag ratio:* is the ratio between the lift forces and the resistance forces supported at a given wind speed.

*Load line:* for an arc-type wing, it is the line from end to end passing through the center of pressure of all sections composing the wing.

*Luffing:* it is the trend of the angle of attack of an arc-type wing to suddenly become negative.

*Resistance to stalling:* it is advisable that arc-type wings have a low stalling speed and that they can recover from a possible stall with minimum increase of apparent wind.

As known, a configuration of pure tensional forces of an arc-type wing needs a structural resistance rather lower with respect to the case in which there is a flexing moment. Consequently, the aerodynamic wing profile can be thinned to increase the L/D aerodynamic efficiency, contributing to increase the energy performances of a high-altitude system for extracting energy from wind.

A tension-structural behavior of arc-type wings with reduced resistance implies, on one hand, an increase of the energy productivity, and on the other hand, a limitation of maneuver and consequent risk of making the wing jaw due to an asymmetrical distribution of the resistance along the arc.

The shape of these wings is approximately semicircular in the plane perpendicular to the apparent wind direction. The circumferential tension implies a radial component operating in all points towards the rated center of the arc shape. These radial forces cause the collapse of the end zones, namely the wings shoulders, unless there is a resisting aerodynamic force or an intrinsic structural stiffness.

The limits of the capability of an arc-type wing to respond to changes of apparent wind conditions have a great incidence on its functional usefulness, above all of its use in the energy field.

Such limits are: stalling, luffing and wing shoulder collapsing.

The problem of wing shoulder collapsing has been dealt with in EP1385739, in which a way to avoid the inward shoulder collapsing is disclosed, by moving the wing shoulder attack edge area frontward with respect to the load line point.

Documents WO-A1-02/096753, WO-A1-2009/035492 and WO-A1-2010/084520 disclose wings according to the preamble of claim 1.

In view of the above prior art, object of the present invention is providing an arc-type wing capable of making uniform the resistance distributed along the arc profile and of restoring the maneuver reactivity.

In compliance with the present invention, said object is obtained by an arc-type wing with high aerodynamic efficiency, shaped as a central arc section connected to pairs of bridles through a pair of shoulders, that each shoulder supporting a panel equipped with an air brake, characterized in that the panel houses on-board sensors, electric energy accumulators, micro-turbines, and a card for collecting data emitted by said sensors.

The above and other objects and advantages of the invention, as will result from the following description, are obtained by an arc-type wing with improved shoulders as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as appears from the enclosed claims.

The present invention will be better described by some preferred embodiments thereof, provided as a non-limiting example, with reference to the enclosed drawings, in which:
figure 1 shows an axonometric view of an arc-type wing equipped with panels with air brakes;
figure 2 shows a radio connection diagram of an arc-type wing with ground base;
figure 3 and figure 4 show an axonometric view of an arc-type wing equipped with fuselage-type tail planes.

An arc-type wing 1 comprises four control bridles, two front bridles 11 and two rear bridles 12.

The arc-type wing 1 can comprise other bridles connected in different point to enable a further check of the angle of attack or to avoid inversions during the luffing flight.

The arc-type wing 1 is shaped as a central arc section 13 connected to the pairs of bridles 11 and 12 through two arc sections 14 possibly extended with a tapered tangent section 15.

Each section composed by the arc 14 and possibly by its respective tapered tangent section 15 makes a shoulder of the arc-type wing 1.

Each shoulder supports a panel 2 which comprises an air brake 21 composed of a flow deflector or spoiler. Each air brake 21 generates a resisting force allowing to introduce a yaw moment useful to restore the maneuver reactivity of the arc-type wing 1.

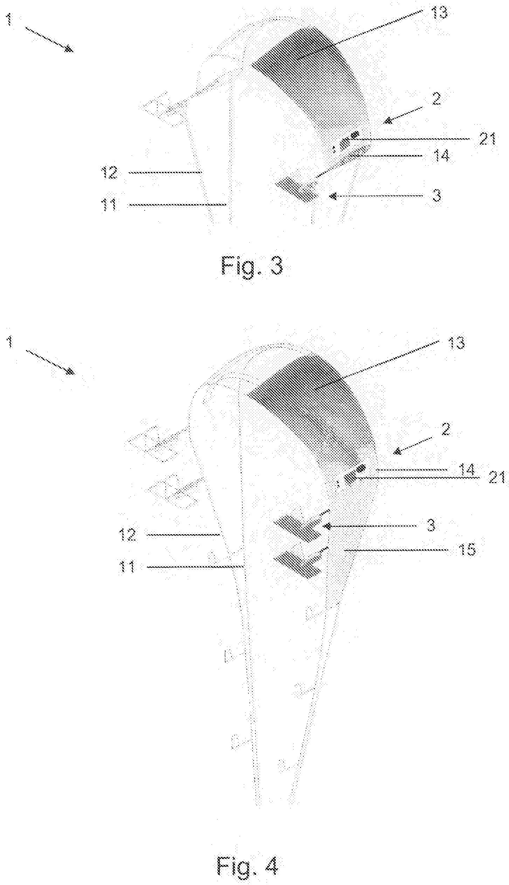

With reference to figures 3 and 4, servo-assisted tail planes 3 are placed on each wing section 15.

The servo-assisted tail planes 3 allow modifying the attitude of the arc-type wing 1 by intervening on the angle of attack both of the central wing section 13, and of the two shoulders.

A geometric measure is performed of the distance and of the parallelism of the shoulders, after which a pitch angle is imposed for each servo-assisted tail plane 3 obtaining the correct angle of attack of the central wing section 13, thereby performing the same function of the length change of the rear bridles 12.

At the same time, a geometric measure is performed of the distance and of the parallelism of the shoulders, after which a roll angle is imposed for each servo-assisted tail plane 3, obtaining the correct angle of attack of each shoulder, allowing to modify the wing shape, thereby performing the same function of the asymmetrical or shape change of the arc-type wing 1.

Each panel 2 houses on-board sensors, electric energy accumulators, micro-turbines, and a card for collecting data emitted by the sensors.

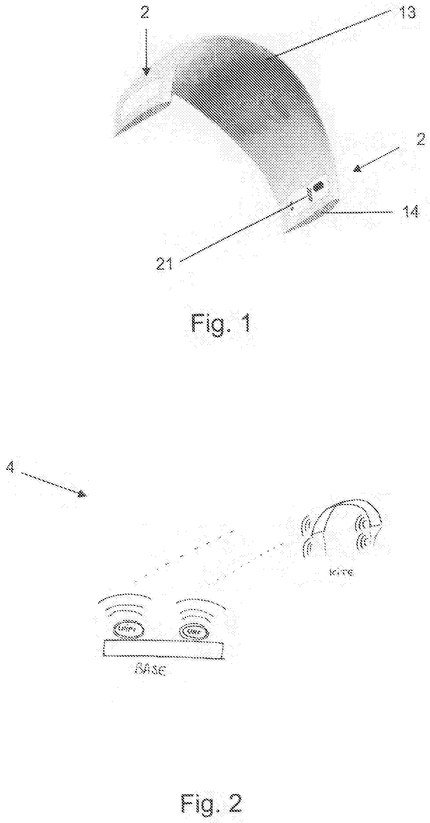

The transmission of such information is given to a double-radio system 4 (figure 2). The MEMS sensors assembled on board the panel 2, accelerometer, gyroscope, magnetometer, barometer and GPS, are periodically queried by processors on board the card, and, after a first processing, are transmitted to radios. The card has further the chance of reading up to 16 analogue signals useful to evaluate flight speed, through a Pitot probe, battery status and other.

Collected data are aggregated in a single package shipped through the radios. The radios are divided into two types, both present on each card, one with wide band (WiFi) and short range (up to 300 meters), the other with narrow band (915 MHz) and long range (up to 20 Km). The first radio transmits without further processing the package which it has received, and over a certain distance from ground it is turned off. The second radio further processes the data, keeping only essential data, and receives commands from ground.

There are a system for managing up to 4 channels (*open source ESC*) useful to actuate simple brushless motors and a system for recharging the batteries which manages the energy recovery from the micro-turbine applied on the panel 2.

On the attack edge of the arc-type wing, fastenings can be present for a magnetic connections to flight devices (multi-copters).

## Claims

1. Arc-type wing (1) with high aerodynamic efficiency for kites, composed of a central arc section (13) connected to pairs of bridles (11, 12) through a pair of shoulders (14, 15), each shoulder (14, 15) supporting a panel (2) equipped with an air brake (21), **characterized in that** the panel (2) houses on-board sensors, electric energy accumulators, micro-turbines, and a card for collecting data emitted by said sensors.

2. Arc-type wing (1) according to claim 1, **characterized in that** the air brake (21) is a spoiler.

3. Arc-type wing (1) according to claim 1, **characterized in that** a double-radio system (4) transmits information respectively in wide band (WiFi) at short range and in narrow band (915 MHz) at long range.

4. Arc-type wing (1) according to any one of the previous claims, **characterized in that**, on each shoulder (14, 15), servo-assisted tail planes (3) are placed to modify an attitude of the arc-type wing (1) by intervening both on an angle of attack of the central wing section (13), and on an angle of attack of the two shoulders (14, 15).

5. Arc-type wing (1) according to claim 4, **characterized in that**, depending on a geometric measure of the distance and of the parallelism of the shoulders (14, 15), a pitch angle is imposed for each servo-assisted tail plane (3) to obtain the correct angle of attack of the central wing section (13).

6. Arc-type wing (1) according to claim 4, **characterized in that**, depending on a geometric measure of the distance and of the parallelism of the shoulders (14, 15), a roll angle is imposed for each servo-assisted tail plane (3) to modify the shape of the arc-type wing (3).

## Patentansprüche

1. Bogenförmiger Flügel (1) mit hoher aerodynamischer Effizienz für Flügel- oder Kite-Profile, der aus einem mittleren Bogenabschnitt (13) gebildet ist, welcher mit einem Paar Mitnehmern (11, 12) durch ein Schulterpaar (14, 15) verbunden ist, jede Schulter (14, 15) trägt eine Tafel (2), die mit einer Aerobremse (21) versehen ist, und der **dadurch gekennzeichnet ist, dass** die Tafel (2) Bordsensoren, Stromakkumulatoren, Mikroturbinen und eine Sammelkarte der Daten, die von den genannten Sensoren erstellt werden, enthält.

2. Bogenförmiger Flügel (1) gemäß Patentanspruch 1, der **dadurch gekennzeichnet ist, dass** die Aerobremse (21) ein Spoiler ist.

3. Bogenförmiger Flügel (1) gemäß Patentanspruch 1, der **dadurch gekennzeichnet ist, dass** ein Dual-Radio-System (4) Informationen mit Breitband (WiFi) auf Kurzstrecken und mit Schmalband (915 MHz) auf Langstrecken übertragt.

4. Bogenförmiger Flügel (1) gemäß einem der vorhergehenden Patentansprüche, der **dadurch gekennzeichnet ist, dass** auf jeder Schulter (14, 15) servounterstützte Endflächen (3) angebracht werden, um die Einstellung des bogenförmigen Flügels (1) zu ändern, indem sowohl auf den Ansatzwinkel des mittleren Flügelabschnitts (13) als auch auf den Ansatzwinkel der beiden Schultern (14, 15) eingegriffen wird.

5. Bogenförmiger Flügel (1) gemäß Patentanspruch 4, der **dadurch gekennzeichnet ist, dass** aufgrund einer geometrischen Messung des Abstandes und der Parallelität der Schultern (14, 15) ein Nickwinkel jeder servounterstützten Endfläche (3) auferlegt wird, sodass der korrekte Ansatzwinkel des mittleren Flügelabschnitts (13) erhalten wird.

6. Bogenförmiger Flügel (1) gemäß Patentanspruch 4, der **dadurch gekennzeichnet ist, dass** aufgrund einer geometrischen Messung des Abstandes und der Parallelität der Schultern (14, 15) ein Kippwinkel jeder servounterstützten Endfläche (3) auferlegt wird, um die Form des bogenförmigen Flügels (3) zu ändern.

## Revendications

1. Aile en arc (1) à efficacité aérodynamique élevée pour cerf-volant ou kite, formée par un tronçon d'arc central (13) relié à un couple de brides (11, 12) à travers un couple d'épaulements (14, 15) dont chacun soutien un panneau (2) doté d'un aérofrein (21) ; **caractérisée en ce que** le panneau (2) accueille des capteurs de bord, des accumulateurs d'énergie électrique, des micro-turbines et une carte de collecte des données émises par les capteurs.

2. Aile en arc (1), selon la revendication 1, **caractérisée en ce que** l'aérofrein (21) est un déporteur.

3. Aile en arc (1), selon la revendication 1, **caractérisée en ce qu'**un système à double radio (4) émet les informations respectivement en bande large (WiFi) à court-rayon et en bande étroite (915 MHz) à long rayon.

4. Aile en arc (1) selon l'une des revendications précédentes, **caractérisée en ce que**, sur chaque épaulement (14, 15), sont placés des plans horizontaux à commande assistée (3) pour modifier la géométrie de l'aile en arc (1) en intervenant aussi bien sur l'angle d'attaque du tronçon d'aile centrale (13), que sur l'angle d'attaque des deux épaulements (14, 15).

5. Aile en arc (1), selon la revendication 4, **caractérisée en ce que**, en fonction de la mesure géométrique de la distance et du parallélisme des épaulements (14, 15), il faut appliquer un angle de tangage à chaque plan horizontal à commande assistée (3) pour obtenir l'angle d'attaque correct du tronçon d'aile central (13).

6. Aile en arc (1), selon la revendication 4, **caractérisée en ce que**, en fonction de la mesure géométrique de la distance et du parallélisme des épaulements (14, 15), il faut appliquer un angle de roulis à chaque plan horizontal à commande assistée (3) pour modifier la forme de l'aile en arc (3).
